# EUROPEAN PATENT SPECIFICATION

(11) **EP 2 377 821 B1**
(45) Date of publication and mention of the grant of the patent: **07.05.2014**
(21) Application number: 11003207.5
(22) Date of filing: 15.04.2011
(51) Int. Cl.: C03B 18/06, C03B 18/22

(54) **Float glass manufacturing apparatus and float glass manufacturing method**
Vorrichtung zur Herstellung von Floatglas und Verfahren zur Herstellung von Floatglas
Appareil de fabrication de verre flotté et procédé de fabrication de verre flotté

(30) Priority: 15.04.2010 JP 2010094425
(43) Date of publication of application: 19.10.2011
(73) Proprietor: Asahi Glass Company, Limited, Chiyoda-ku Tokyo 100-8405 (JP)
(72) Inventor: Takiguchi, Tetsushi, Chiyoda-Ku Tokyo 100-8405 (JP); Iga, Motoichi, Chiyoda-Ku Tokyo 100-8405 (JP)
(74) Representative: Müller-Boré & Partner Patentanwälte PartG mbB

(56) References cited:
- EP-A1- 1 739 062
- EP-A1- 1 911 725
- WO-A1-2009/054411
- DE-A1-102007 028 977
- JP-A- 8 325 024
- JP-A- 11 236 231
- US-A- 3 771 985

## Description

The present invention relates to a float glass manufacturing apparatus and a float glass manufacturing method.

A float glass manufacturing apparatus is a device that forms a glass ribbon by continuously supplying molten glass onto a molten metal bath surface and that then carries the glass ribbon forward along the bath surface. In the apparatus, a glass ribbon is formed into a band plate-shape utilizing the smooth bath surface of the molten metal (typically, molten tin). At that time, an amount of heat generated by a plurality of heaters provided above the glass ribbon is controlled in order to control the temperature distribution of the glass ribbon.

The plurality of heaters are provided as a plurality of rows arranged in the conveying direction of the glass ribbon. In each row, a plurality of heaters are provided in the width direction of the glass ribbon. The temperature distribution of the glass ribbon is controlled by individually controlling the amounts of heat generated by each of heaters. Accordingly, a glass plate with small variation in thickness can be manufactured.

However, if the amounts of heat generated by the plurality of heaters are individually controlled, the number of the controllers of the heaters is large. Accordingly, the apparatus is increased in size. The management of the apparatus is complicated.

Thus, the following technique has been proposed (see, e.g., Patent Documents 1 and 2). That is, a heater area provided with a plurality of heaters is sectioned into subareas in the conveying direction and width direction of the glass ribbon, so that a plurality of heaters are provided in each subarea. In addition, a plurality of heaters provided in each single subarea are collectively controlled by an associated single controller.
Patent Document 1: JP-A-8-325024
Patent Document 2: WO 09/054411

Another arrangement of heaters in a float glass manufacturing apparatus is disclosed in DE 10 2007 028 977 A1.

However, in a natural condition, a glass ribbon is expanded until the thickness thereof reaches a value (hereinafter referred to as an "equilibrium thickness") determined due to surface tension or gravity. The equilibrium thickness depends upon surface tension, as described above, and varies with the type or the temperature of glass and is, e.g., 6 to 7 millimeters (mm).

Generally, when the thickness of the glass ribbon is set to be less than the equilibrium thickness, the glass ribbon is stretched to a thin thickness by increasing the rate of drawing the glass ribbon. At that time, in order to prevent the width of the glass ribbon from being narrow, end portions in the width direction of the glass ribbon are supported by rotary members called "top rolls".

Especially, in recent years, thin glass substrates (whose thickness is, e.g., 0.7 mm or less) for flat panel displays (FPD) such as liquid crystal displays (LCD) have been manufactured. Such thin glass plates are required to be reduced in thickness to a thinner value as compared with conventional glass plates. Accordingly, a large number of top rolls are needed. Further, such thin glass plates are more affected by variation in the thickness.

If such top rolls are used, a float glass manufacturing apparatus differing from a conventional one is needed.

The invention is accomplished in view of the above problems. It is an object of the invention to provide a float glass manufacturing apparatus appropriate for the use of the top rolls.

In order to accomplish the above object, the present invention provides the following float glass manufacturing apparatus and a float glass manufacturing method.

The present invention provides a float glass manufacturing apparatus which forms a glass ribbon by continuously supplying molten glass to a bath surface of a molten metal bath and carries the glass ribbon forward along the bath surface, the apparatus comprising:
a plurality of pairs of top roll bodies configured to support end portions in a width direction of the glass ribbon;
a plurality of rows of heaters provided in a predetermined heater area above the glass ribbon; and
a plurality of controllers,
wherein the heater area is divided to a plurality of rows arranged along a conveying direction of the glass ribbon,
wherein one or more of the heaters are provided in each subarea obtained by sectioning each of the rows in the width direction of the glass ribbon,
wherein the heater(s) within the respective subarea are collectively controlled by one of the controllers, which is provided corresponding to the subarea,
wherein a boundary between every two adjacent rows is taken as a dividing portion perpendicular to the conveying direction of the glass ribbon, and
wherein a distance along the conveying direction of the glass ribbon between the dividing portion closest to the rotation center of the mostdownstream top roll body and the rotation center of the mostdownstream top roll body is set to be within

90 cm.
The float glass manufacturing apparatus of the present invention is further preferred that the distance is set to be within 80 cm.

The float glass manufacturing apparatus of the present invention is preferred that the mostdownstream top roll body is provided in a region in which a viscosity of the glass ribbon ranges from 10^{5.7} dPa·s to 10^{7.5} dPa·s.

The float glass manufacturing apparatus of the present invention is preferred that one or more sectioning portions sectioning the heater area in the width direction are out of alignment between two adjacent rows.

The float glass manufacturing apparatus of the present invention is preferred that two or more consecutive rows are sectioned in the width direction along a predetermined flow line in the glass ribbon.

The present invention provides a float glass manufacturing method using the float glass manufacturing apparatus of the present invention,
wherein an amount of heat generated per unit area of the downstream row of two adjacent rows adjoining the dividing portion closest to the rotation center of the mostdownstream top roll body is controlled to be 85% or less with respect to that of heat generated per unit area of the other upstream row of the two adjacent rows.

The float glass manufacturing method of the present invention is preferred that the molten glass is alkali-free glass containing, as represented by mass percentage based on oxides:
SiO₂: 50 to 66 mass%;
Al₂O₃: 10.5 to 24 mass%;
B₂O₃: 0 to 12 mass%;
MgO: 0 to 8 mass%;
CaO: 0 to 14.5 mass%;
SrO: 0 to 24 mass%;
BaO: 0 to 13.5 mass%;
MgO + CaO + SrO + BaO: 9 to 29.5 mass%; and
ZrO₂: 0 to 5 mass%.

The float glass manufacturing method of the present invention is preferred that the molten glass is alkali-free glass containing, as represented by mass percentage based on oxides:
SiO₂: 58 to 66 mass%;
Al₂O₃: 15 to 22 mass%;
B₂O₃: 5 to 12 mass%;
MgO: 0 to 8 mass%;
CaO: 0 to 9 mass%;
SrO: 3 to 12.5 mass%;
BaO: 0 to 2 mass%; and
MgO + CaO + SrO + BaO: 9 to 18 mass%.

According to the present invention, the float glass manufacturing apparatus appropriate for the use of the top rolls can be provided.
FIG. 1 is a plan view illustrating the internal structure of a float glass manufacturing apparatus according to an embodiment of the present invention.
FIG. 2 is a side view illustrating the internal structure of the float glass manufacturing apparatus.
FIG. 3 is a plan view (I) illustrating the positional relationship between the rotation center of a mostdownstream top roll body 25A and a sectioning portion 17.
FIG. 4 is a plan view (II) illustrating the positional relationship between the rotation center of the mostdownstream top roll body 25A and the sectioning portion 17.
FIG. 5 is an explanatory view (I) illustrating the subareas of a heater area.
FIG. 6 is an explanatory view (II) illustrating the subareas of a heater area.
FIG. 7 is an explanatory view (III) illustrating the subareas of a heater area.
FIG. 8 is an explanatory view (IV) illustrating the subareas of a heater area.

Hereinafter, embodiments for carrying out the invention are described with reference to the accompanying-drawings. Incidentally, the invention is not limited to the embodiments to be described below. Various modifications and substitutions can be added thereto without departing from the spirit and scope of the invention.

### (Float Glass Manufacturing Apparatus)

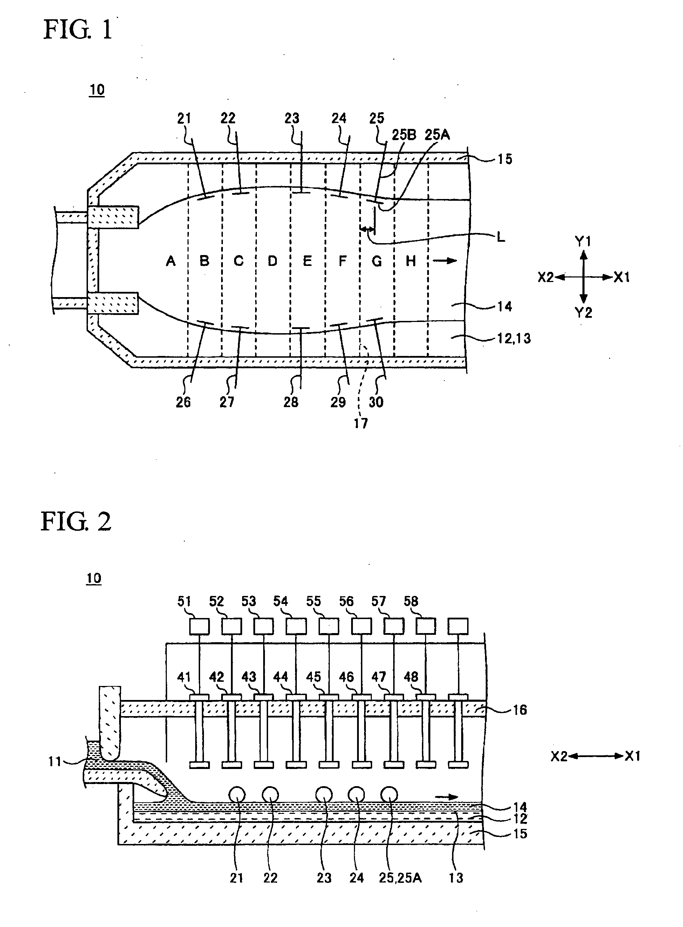

FIG. 1 is a plan view illustrating the internal structure of a float glass manufacturing apparatus 10 according to an embodiment of the invention. FIG. 2 is a side view illustrating the internal structure of the float glass manufacturing apparatus 10.

The float glass manufacturing apparatus 10 (hereinafter also referred to simply as "apparatus 10") is, for example, a device configured, as illustrated in FIGS. 1 and 2, to form a glass ribbon 14 by continuously supplying molten glass 11 to the bath surface 13 of molten metal 12 and to carry the glass ribbon 14 forward along the bath surface 13 in the direction of arrow X1. In the apparatus 10, the glass ribbon 14 is formed into a band plate-shape utilizing the smooth bath surface 13 of the molten metal (typically, molten tin) 12. The formed glass ribbon 14 is conveyed to an annealing furnace. After annealed in the annealing furnace, the glass ribbon 14 is cut to a predetermined dimension by a cutting machine. Thus, the glass ribbon 14 is formed into a glass plate.

The float glass manufacturing apparatus 10 includes a plurality of top rolls 21 to 30, a plurality of rows of heaters 41 to 48, and a plurality of controllers 51 to 58. The plurality of top rolls 21 to 30 are rotary members supporting the end portions in the width direction of the glass ribbon 14. The plurality of rows of heaters 41 to 48 are provided above the glass ribbon 14 and heat the glass ribbon 14 passing therebelow, under the control of the plurality of controllers 51 to 58. In the present specification, the term "below" means "vertically downward", while the term "above" means "vertically upward". The term "a width direction" means "a direction perpendicular to a direction of conveying a glass ribbon on the bath-surface of a molten metal bath".

The plurality of top rolls 21 to 30 are pairs of top rollers arranged on both sides in the width direction of the glass ribbon 14 to face each other. The top rolls 21 to 30 prevent the width of the glass ribbon 14 from being reduced by the surface tension of the glass ribbon 14. The number of pairs of top rollers installed in the apparatus 10 is appropriately set according to molding conditions such as the type of glass and a target thickness thereof. The number of pairs of top rollers is, e.g., 4 to 30, and preferably 10 to 30 (in FIG. 1, only five pairs thereof are illustrated). There is a tendency that the thinner the target thickness of the glass plate is, the larger the number of top rolls installed in the apparatus is.

The top rolls 21 to 30 (more precisely, the top roll bodies to be described below) are provided in a forming region in which the glass ribbon 14 is formed (i.e., a region in which the viscosity of the glass ribbon 14 ranges from 10^{4.5} deci-Pascal-seconds (dPa·s) to 10^{7.5} dPa·s). The mostdownstream top roll 25 (more precisely, the top roll body 25A to be described below) is provided in a downstream part (more precisely, a part in which the viscosity of the glass ribbon 14 ranges from 10^{5.7} dPa·s to 10^{7.5} dPa·s) of the forming region.

The mostdownstream top roll 25 is configured by a top roll body 25A supporting the end portion in the width direction of the glass ribbon 14, and a rotary shaft 25B connected to the top roll body 25A. When the rotary shaft 25B is rotated by a drive unit such as an electric motor, the top roll body 25A feeds the end portion of the glass ribbon 14 to a downstream side while rotating.

The top roll body 25A is formed to a circular disk-shape, and configured so that an outer circumferential surface thereof is contacted with the end portions in the width direction of the glass ribbon 14. A plurality of protrusions are provided on the outer circumferential surface along a circumferential direction to prevent the top roll from slipping.

The configuration of each of the other top rolls 21 to 24 and 26 to 30 is similar to that of the mostdownstream top roll 25, and thus, the description of the configuration thereof is omitted.

The plurality of rows of heaters 41 to 48 are provided above the glass ribbon 14. For example, as illustrated in FIG. 2, the plurality of rows of heaters 41 to 48 are suspended from the ceiling 16 of the bath 15 that contains the molten metal 12. The heaters 41 to 48 are provided, for example, in such a manner that it is arranged like a matrix having rows arranged in the conveying direction (i.e., the direction of arrows X1-X2) of the glass ribbon 14, and having columns arranged in the width direction (i.e., the direction of arrows Y1-Y2) of the glass ribbon 14.

For example, an electric heater (such as an electric heater described in WO2006/085552) heated by being energized is used as each of the heaters 41 to 48. The shape of each of the heaters 41 to 48 is not limited. However, for example, a bar-shaped heater can be used. The temperature distribution of the glass ribbon 14 can be controlled by controlling an amount of heat generated in each of the heaters 41 to 48.

The plurality of controllers 51 to 58 are devices controlling an amount of heat generated in each of the plurality of rows of heaters 41 to 48. The heater area provided with the plurality of rows of heaters 41 to 48 is sectioned into a plurality of subareas, though the subareas are described below in detail. Each subarea is provided with the plurality of heaters that are collectively controlled by an associated single controller. Consequently, the number of the controllers can be reduced.

The plurality of heaters provided in each single subarea can be collectively controlled by the associated single controller in such a manner that the amounts of heat generated in the plurality of heaters are substantially equal to one another.

As illustrated in FIG 1, first, the heater area is divided into a plurality of rows A to H arranged along the conveying direction (i.e., the direction of arrows X1-X2) of the glass ribbon 14. Though the number of rows is appropriately set according to forming conditions such as the type of glass and the size of the bath 15, the number ranges preferably from 4 to 15. If the number of rows is too small, it is difficult to control the temperature distribution in the conveying direction of the glass ribbon 14. On the other hand, if the number of rows is too large, the number of controllers 51 to 58 becomes too large. Thus, the size of the apparatus 10 is increased. In addition, the management of the apparatus 10 becomes complicated.

Each of the rows A to H is sectioned into a plurality of subareas arranged in the width direction (i.e., the direction of arrows Y1-Y2) of the glass ribbon 14. Preferably, the sectioning of the rows is performed symmetrically with respect to the central line in the conveying direction of the glass ribbon 14. Additionally, though the number of subareas in each row is appropriately set according to forming conditions such as the type of glass and the size of the bath 15, the number ranges preferably from 3 to 30, more preferably, 4 to 30, even more preferably, 4 to 20, end especially preferably, 4 to 15. If the number of subareas in each row is too small, it is difficult to sufficiently control the temperature distribution in the width direction of the glass ribbon 14. On the other hand, if the number of subareas in each row is too large, the number of controllers 51 to 58 becomes too large. Thus, the size of the apparatus 10 is increased. In addition, the management of the apparatus 10 becomes complicated.

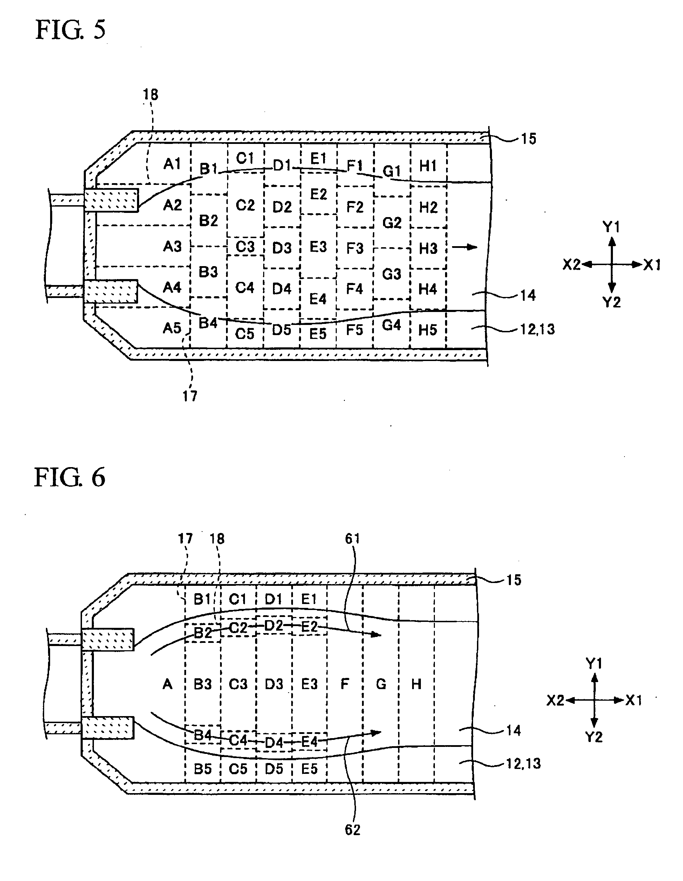

Two rows adjoining in the conveying direction of the glass ribbon 14 are dividing in the dividing portion 17. The dividing portion 17 is located substantially at the center between actual heaters adjoining each other in the conveying direction. On the other hand, two subareas adjoining each other in the width direction of the glass ribbon 14 are sectioned by the sectioning portion 18 (see FIG. 5 or the like). The sectioning portion 18 is located substantially at the center between actual heaters adjoining each other in the width direction of the glass ribbon 14.

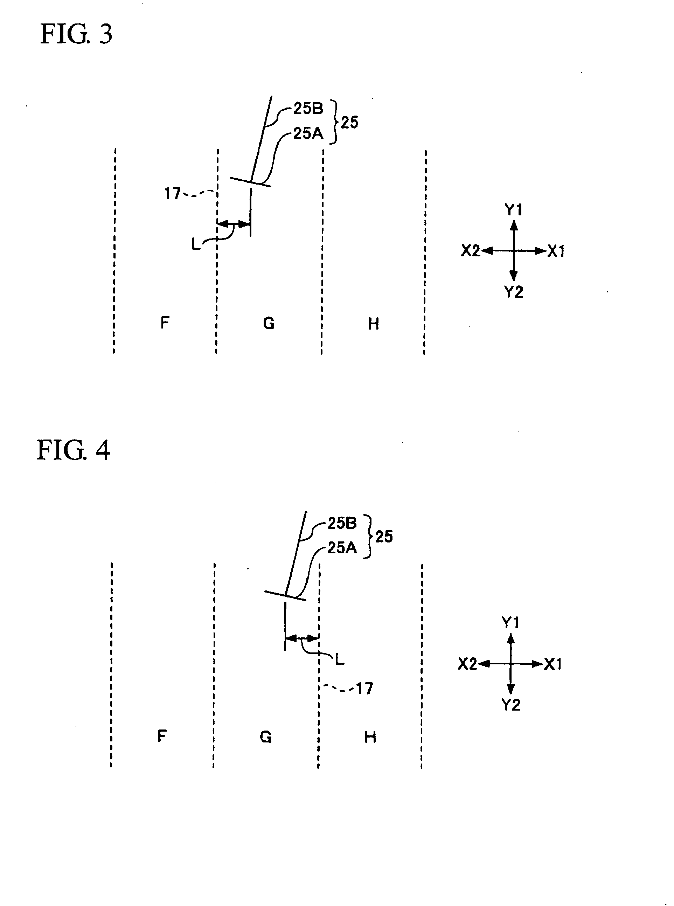

According to the present embodiment, a distance L (see FIGs. 3 and 4) in the conveying direction (i.e., the direction of arrows X1-X2) of the glass ribbon 14 between one (hereinafter also referred to simply as a "nearest dividing portion 17") of a plurality of dividing portions 17, which is closest to the rotation center of the mostdownstream top roll body 25A, and the rotation center is set to be within 90 centimeters (cm), and preferably within 80 cm.

For example, if the distance L illustrated in FIGs. 3 and 4 is within 90 cm, the temperature of the glass ribbon 14 can be optimized in the vicinity of the mostdownstream top roll body 25A by causing a sufficient difference in amount of generated heat per unit area between two rows (F and G (or G and H)) adjoining the nearest dividing portion 17. That is, the temperature of the glass ribbon 14 can sufficiently be lowered at a downstream side of the vicinity of the mostdownstream top roll body 25A while maintained at a desired temperature in the vicinity of the body 25A.

On the other hand, when the distance L illustrated in FIGs. 3 and 4 exceeds 110 cm, even if the amount of generated heat per unit area between the two rows adjoining the nearest dividing portion 17 is optimized, the above advantages may be not able to be obtained. That is, in this case, when the temperature of the glass ribbon 14 is maintained at a desired value in the vicinity of the mostdownstream top roll body 25A, the temperature thereof cannot sufficiently be lowered at the downstream side of the mostdownstream top roll body 25A.

According to the present embodiment, as described above, the temperature of the glass ribbon 14 can be sufficiently lowered at a downstream side of the vicinity of the mostdownstream top roll body 25A while maintaining at a desired temperature in the vicinity of the body 25A. Accordingly, the glass ribbon 14 released from restraint by the top rolls can be suppressed from being narrowed in the width direction due to the surface tension at the downstream side of the mostdownstream top roll body 25A. In addition, the glass ribbon 14 can be suppressed from being undulated in the width direction thereof. Accordingly, variation in the thickness of the glass ribbon 14 can be maintained within an appropriate range. This advantage is more pronounced with reduction in the thickness of the glass ribbon 14 because the glass ribbon 14 becomes more deformable with decrease in the thickness thereof. Accordingly, the invention is suitable for a case where the thickness of a glass plate is 3 mm or less, more suitable in a case of the thickness of 2 mm or less, further suitable in a case of the thickness of 1.5 mm or less, and particularly suitable in a case of the thickness of 0.7 mm or less. It is desirable from the viewpoint of handling ability that the thickness of the glass plate is 0.1 mm or more.

The invention is preferable in manufacturing a glass substrate for a liquid crystal display. The following alkali-free glasses (1) to (3) each having a composition described below exemplify the glass substrate.
(1) An alkali-free glass containing, as represented by mass percentage based on oxides:
   SiO₂: 50 to 66 mass%;
   Al₂O₃: 10.5 to 24 mass%;
   B₂O₃: 0 to 12 mass%;
   MgO: 0 to 8 mass%;
   CaO: 0 to 14.5 mass%;
   SrO: 0 to 24 mass%;
   BaO: 0 to 13.5 mass%;
   MgO + CaO + SrO + BaO: 9 to 29.5 mass%; and
   ZrO₂: 0 to 5 mass%.
(2) An alkali-free glass containing, as represented by mass percentage based on oxides:
   SiO₂: 58 to 66 mass%;
   Al₂O₃: 15 to 22 mass%;
   B₂O₃: 5 to 12 mass%;
   MgO: 0 to 8 mass%;
   CaO: 0 to 9 mass%;
   SrO: 3 to 12.5 mass%;
   BaO: 0 to 2 mass%; and
   MgO + CaO + SrO + BaO: 9 to 18 mass%.
(3) An alkali-free glass containing, as represented by mass percentage based on oxides:
   SiO₂: 50 to 61.5 mass%;
   Al₂O3: 10.5 to 18 mass%;
   B₂O₃: 7 to 10 mass%;
   MgO: 2 to 5 mass%;
   CaO: 0 to 14.5 mass%;
   SrO: 0 to 24 mass%;
   BaO: 0 to 13.5 mass%; and
   MgO + CaO + SrO + BaO: 16 to 29.5 mass%.

### (Subareas of Heater Area)

Next, specific examples of subareas of the heater area are described with reference to FIGs. 5 to 8. In each subarea, several to tens of electric heaters are arranged. The amount of heat generated in the electric heaters is controlled in subarea unit. FIGs. 5 to 8 are plan views corresponding to FIG 1. The sectioning of the heater area illustrated in each of FIGs. 5 to 8 is performed symmetrically with respect to the central line in the conveying direction of the glass ribbon 14.

In the specific example illustrated in FIG. 5, one or more of the sectioning portions 18 are out of alignment in the width direction between two of rows in the heater area obtained by dividing the glass ribbon 14 along the conveying direction. For example, between rows C and D, a sectioning portion 18 for sectioning row C into subareas C2 and C3 is out of alignment with another portion 18 for sectioning row D into subareas D2 and D3. Accordingly, a part of the glass ribbon 14 which has passed under the sectioning portion 18 for sectioning the upstream row C into the subareas C2 and C3, passes under the subarea D3 (i.e., between the sectioning portions 18) in a downstream row D.

If adjacent subareas in the width direction in a row differ from each other in the amount of generated heat per unit area, an abrupt temperature difference in the width direction occurs in the vicinity of a sectioning portion 18 for sectioning between the adjacent subareas. The temperature difference also occurs at an associated part of the glass ribbon 14 passing under the sectioning portion 18. When the glass ribbon 14 passes under a downstream row, the part of the glass ribbon 14, in which the temperature difference is caused, passes under the subarea. At that time, the above temperature difference in the glass ribbon 14 is alleviated. Consequently, the variation in the thickness of the glass ribbon 14 can be reduced.

The place at which the sectioning portions 18 are out of alignment corresponds preferably to a part of a glass plate, where the thickness is greatly deviated from an average value thereof in the glass plate. Further, the number of such places at which the sectioning portions 18 are out of alignment is preferably 2 or more. In addition, the sectioning portions 18 are preferably out of alignment between two adjacent rows.

Further, a region of places at which the sectioning portions 18 are out of alignment is preferably a region in which the viscosity of the glass ribbon 14 passing thereunder ranges from 10^{4.5} dPa·s to 10^{6.5} dPa·s.

According to the specific example illustrated in FIG. 6, in the heater area, any of two or more consecutive rows divided in the conveying direction of the glass ribbon 14 are sectioned in the width direction along a predetermined flow line in the glass ribbon 14.

The term "predetermined flow line" of the glass ribbon 14 means a flow path through which a predetermined part located in the width direction of the glass ribbon 14 steadily passes. Further, the predetermined flow line in the glass ribbon 14 is preferably a flow path corresponding to a part in which the thickness of the glass plate is greatly deviated from the average value thereof.

Furthermore, the region in which subareas are formed along the predetermined flow line in the glass ribbon 14 is preferably a region in which the viscosity of the glass ribbon 14 passing thereunder ranges from 10^{5.3} dPa·s to 10^{5.7} dPa·s. This is because the variation in the thickness of the glass ribbon 14 greatly depends upon the shape of the glass ribbon 14 in this range.

According to the specific example illustrated in FIG 6, consecutive four rows B to E, into which the heater region is divided in the conveying direction of the glass ribbon 14, are sectioned in the width direction along a plurality of predetermined flow lines 61 and 62. These sectioning portions 18 are formed linearly. A part of the glass ribbon 14, which passes under the subarea B2 of the upstream row B, mostly passes under subareas C2 to E2 corresponding to rows C to E, respectively. Similarly, a part of the glass ribbon 14, which passes under the subarea B4 in the upstream row B, mostly passes under subareas C4 to E4 corresponding to rows C to E, respectively.

Thus, predetermined parts located in the width direction of the glass ribbon 14 pass under subareas adjoining in the conveying direction of the glass ribbon between two consecutive rows. If the subareas adjoining in the conveying direction of the glass ribbon differ from each other in the amount of heat generated per unit area, a temperature difference occurs between these adjoining subareas. The temperature difference also occurs in a predetermined part of the glass ribbon 14, which passes under these adjoining subareas. Thus, the thickness of the predetermined part of the glass ribbon 14 changes when passing under the adjoining subareas. Accordingly, the thickness of the predetermined part located in the width direction of the glass ribbon 14 can be set at a desired value along the flow path. The variation in the thickness of the glass ribbon 14 can be maintained within an appropriate range.

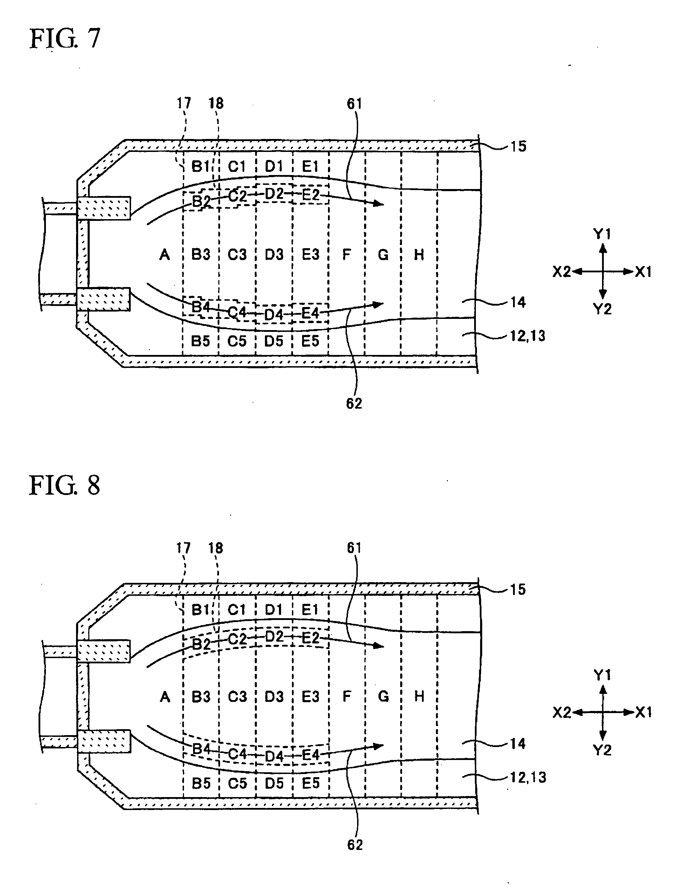

According to the specific example illustrated in FIG. 7, two or more consecutive rows, into which the heater is divided in the conveying direction of the glass ribbon, are sectioned in the width direction along the plurality of predetermined flow lines 61 and 62, similarly to the specific example illustrated in FIG. 6. However, the specific example illustrated in FIG. 7 differs from that illustrated in FIG. 6 in that these sectioning portions 18 are formed into a step-shape in rows B and C. Accordingly, in the rows B and C, the temperature of each of the predetermined parts in the width direction of the glass ribbon 14 can be more strictly controlled.

According to the specific example illustrated in FIG. 8, two or more consecutive rows, into which the heater area is divided in the conveying direction of the glass ribbon, are sectioned in the width direction along the plurality of predetermined flow lines 61 and 62 of the glass ribbon 14, similarly to the specific example illustrated in FIG. 6. However, the specific example illustrated in FIG. 8 differs from that illustrated in FIG. 6 in that these sectioning portions 18 are formed into a curved-shape in rows B to E. Accordingly, in the rows B to E, the temperature of each of the predetermined parts in the width direction of the glass ribbon 14 can be more strictly controlled.

### (Method for Manufacturing Float Glass)

Next, a method for manufacturing float glass using the above apparatus 10 is described hereinafter.

A float glass manufacturing method according to the present embodiment is to form a glass ribbon 14 by continuously supplying molten glass 11 to a bath surface 13 of molten metal 12 and to carry the glass ribbon 14 forward along the bath surface 13 while the glass ribbon 14 is heated by a plurality of rows of heaters. At that time, the glass ribbon 14 is formed into a band plate-shape utilizing the smooth bath surface 13 of the molten metal (typically, molten tin) 12. In addition, at that time, the heater area is sectioned in the conveying direction and the width direction of the glass ribbon 14. Then, a plurality of heaters are provided in each subarea. In addition, the plurality of heaters provided in each single subarea are collectively controller by a single associated controller.

According to the present embodiment, the ratio of the amount W2 of heat generated per unit area in the downstream-side row with respect to the amount W1 of heat generated per unit area in the upstream-side row of two rows adjoining the dividing portion 17 closest to the rotation center of the mostdownstream top roll body 25A is controlled to be 85% or less, preferably within a range from 20% to 85%, and more preferably within a range from 40% to 80%. That is, the value of W2/W1 × 100 is set to be 85 or less, preferably within a range from 20 to 85, and more preferably within a range from 40 to 80.

If the dividing portion 17 closest to the rotation center of the mostdownstream top roll body 25A is located at the downstream side with respect to the rotation center, as illustrated in, e.g., FIG. 4, the amount W2 of heat generated per unit area in a downstream-side row H is particularly preferably controlled to be 60% or less of the amount W1 of heat generated per unit area in an upstream-side row G. That is, the value of W2/W1 × 100 is particularly preferably 60 or less.

If the dividing portion 17 closest to the rotation center of the mostdownstream top roll body 25A is located at the upstream side with respect to the rotation center, as illustrated in, e.g., FIG. 3, the amount W3 of heat generated per unit area in the more downstream-side row H is particularly preferably controlled to be 60% or less of the amount W2 of heat generated per unit area in a downstream-side row G. That is, the value of W3/W2 × 100 is particularly preferably 60 or less. In this case, the amounts W1, W2, and W3 preferably have the relationship of W1>W2>W3.

Consequently, the temperature of the glass ribbon 14 can be sufficiently lowered at the downstream side of the vicinity of the mostdownstream top roll body 25A while maintaining a desired temperature in the vicinity of the body 25A. Thus, the glass ribbon 14 released from restraint by the top rolls can be suppressed from being narrowed in the width direction due to the surface tension at the downstream side of the mostdownstream top roll body 25A. In addition, the glass ribbon 14 can be suppressed from being undulated in the width direction thereof. Accordingly, variation in the thickness of the glass ribbon 14 can be maintained within an appropriate range. This advantage is more pronounced with reduction in the thickness of the glass ribbon 14 because the glass ribbon 14 becomes deformable with decrease in the thickness thereof. Therefore, the invention is suitable for a case where the thickness of the glass plate is 3 mm or less, more suitable in a case of the thickness of 2 mm or less, further suitable in a case of the thickness of 1.5 mm or less, and particularly suitable in a case of the thickness of 0.7 mm or less. It is desirable from the viewpoint of handling ability that the thickness of the glass plate is 0.1 mm or more.

### EXAMPLES

Hereinafter, the present invention is described specifically with reference to examples. However, the present invention is not limited thereto.

### [Examples 1 to 4]

In Examples 1 to 4, glass plates were manufactured using an apparatus similar to the apparatus 10 illustrated in FIGs. 1 and 2. It was set that the average thickness of the glass plates was 0.7 mm, and that the number of pairs of top rolls was 16 (thus, a total number of the top rolls was 32). In each Example, the distance L along the conveying direction of the glass ribbon 14 between the rotation center of the mostdownstream top roll body and the nearest dividing portion was set as shown in TABLE 1. In each Example, the ratio (W2/W1 × 100) of the amount W2 of heat generated per unit area of the downstream row with respect to the amount W1 of heat generated per unit area of the upstream row of two rows adjoining the nearest dividing portion is shown in TABLE 1.

For convenience, the distance L described in TABLE 1 is represented by a positive/negative value in order to show the positional relationship between the rotation center of the mostdownstream top roll body and the nearest dividing portion. The positive value of the distance L indicates that the nearest dividing portion closest to the rotation center of the mostdownstream top roll body is located at the downstream side of the rotation center thereof (see, e.g., FIG. 4). On the other hand, the negative value of the distance L indicates that the nearest dividing portion closest to the rotation center of the mostdownstream top roll body is located at the upstream side of the rotation center (see, e.g., FIG. 3).

In this case, Examples 1 and 2 are working examples, while Examples 3 and 4 are comparative examples.

First, in each Example, a glass ribbon was formed into a band plate-shape, using the apparatus of the above configuration. The formed glass ribbon was annealed. Then, the glass ribbon was cut in the width direction thereof and a longitudinal direction (i.e., a direction coinciding with the conveying direction of the glass ribbon), so that parts contacted with the top rolls (i.e., both end portions in the width direction of the glass ribbon) were removed. Thus, glass plates were obtained.

Next, the distribution of thickness in the width direction of the obtained glass plate was measured. Then, by employing the center point of the glass plate as a reference point, 75 measurement points were provided on each of both sides in the width direction at a pitch of 2 cm, that is, a total of 151 measurement points were provided. According to results of the measurement, a difference (T1 - T2 (hereinafter referred to as a "thickness deviation")) between the maximum thickness T1 and a minimum thickness T2 was investigated. In addition, this investigation was performed on each of 100 sheets of glass plate to measure the average value and the maximum value of the thickness deviation. In view of high display quality required in recent years for flat panel displays such as a plasma display and a liquid crystal display, the average value of the thickness deviation is preferably 20 µm or less, and the maximum value of the thickness deviation is preferably 38 µm or less. The results are shown in TABLE 1.

**[TABLE 1]**

| | | Example 1 | Example 2 | Example 3 | Example 4 |
|---|---|---|---|---|---|
| Distance L (cm) | | +63 | -72 | +120 | -113 |
| Ratio of Amount of Generated Heat | (W₂/W₁×100) | 55 | 79 | 48 | 89 |
| | (W₃/W₂×100) | - | 51 | - | 47 |
| Thickness Deviation (µm) | Average Value | 14.5 | 16.9 | 22.3 | 24.3 |
| | Maximum Value | 25 | 34 | 59 | 41 |

As described in TABLE 1, in the case of Examples 1 and 2, the average value of the thickness deviation is 20 µm or less, and the maximum value thereof is 38 µm or less. Thus, it can be known that Examples 1 and 2 are small in the thickness deviation in comparison with Examples 3 and 4.

### DESCRIPTION OF REFERENCE NUMERALS AND SIGNS

- 10: float glass manufacturing apparatus
- 11: molten glass
- 12: molten metal
- 13: bath surface
- 14: glass ribbon
- 15: bath
- 16: ceiling
- 17: dividing portion
- 18: sectioning portion
- 21 - 30: top rolls
- 25: mostdownstream top roll
- 25A: top roll body
- 25B: rotary shaft
- 41 - 48: heaters
- 51 - 58: controllers

## Claims

1. A float glass manufacturing apparatus (10) which forms a glass ribbon (14) by continuously supplying molten glass (11) to a bath surface (13) of a molten metal (12) bath and carries the glass ribbon (14) forward along the bath surface (13), the apparatus (10) comprising:
a plurality of pairs of top roll bodies (21 to 30) configured to support end portions in a width direction of the glass ribbon (14);
a plurality of rows of heaters (41 to 48) provided in a predetermined heater area above the glass ribbon (14); and
a plurality of controllers (51 to 58),
wherein the heater area is divided into a plurality of rows (A to H) arranged along a conveying direction of the glass ribbon (14),
wherein one or more of the heaters (41 to 48) are provided in each subarea obtained by sectioning each of the rows (A to H) in the width direction of the glass ribbon (14),
wherein the heater(s) (41 to 48) within the respective subarea are collectively controlled by one of the controllers (51 to 58), which is provided corresponding to the subarea,
wherein a boundary between every two adjacent rows is taken as a dividing portion (17) perpendicular to the conveying direction of the glass ribbon (14), and
wherein a distance (L) along the conveying direction of the glass ribbon (14) between the dividing portion (17) closest to a rotation center of the mostdownstream top roll body (25A) and the rotation center of the mostdownstream top roll body (25A) is set to be within 90 cm.

2. The float glass manufacturing apparatus (10) according to claim 1, wherein the distance (L) is set to be within 80 cm.

3. The float glass manufacturing apparatus (10) according to claim 1 or 2, wherein the mostdownstream top roll body (25A) is provided in a region in which a viscosity of the glass ribbon (14) ranges from 10^{5.7} dPa·s to 10^{7.5} dPa·s.

4. The float glass manufacturing apparatus (10) according to any one of claims 1 to 3, wherein one or more sectioning portions (18) sectioning the heater area in the width direction are out of alignment between two adjacent rows.

5. The float glass manufacturing apparatus (10) according to any one of claims 1 to 4, wherein two or more consecutive rows are sectioned in the width direction along a predetermined flow line in the glass ribbon (14).

6. A float glass manufacturing method using the float glass manufacturing apparatus (10) according to any one of claims 1 to 5,
wherein an amount of heat generated per unit area of the downstream row of two adjacent rows adjoining the dividing portion (17) closest to the rotation center of the mostdownstream top roll body (25A) is controlled to be 85% or less with respect to that of heat generated per unit area of the other upstream row of the two adjacent rows.

7. The float glass manufacturing method according to claim 6, wherein the molten glass (11) is alkali-free glass containing, as represented by mass percentage based on oxides:
SiO₂: 50 to 66 mass%;
Al₂O₃: 10.5 to 24 mass%;
B₂O₃: 0 to 12 mass%;
MgO: 0 to 8 mass%;
CaO: 0 to 14.5 mass%;
SrO: 0 to 24 mass%;
BaO: 0 to 13.5 mass%;
MgO + CaO + SrO + BaO: 9 to 29.5 mass%; and
ZrO₂: 0 to 5 mass%.

8. The float glass manufacturing method according to claim 6, wherein the molten glass (11) is alkali-free glass containing, as represented by mass percentage based on oxides:
SiO₂: 58 to 66 mass%;
Al₂O₃: 15 to 22 mass%;
B₂O₃: 5 to 12 mass%;
MgO: 0 to 8 mass%;
CaO: 0 to 9 mass%;
SrO: 3 to 12.5 mass%;
BaO: 0 to 2 mass%; and
MgO + CaO + SrO + BaO: 9 to 18 mass%.

## Patentansprüche

1. Vorrichtung (10) zur Herstellung von Floatglas, welche ein Glasband (14) durch das kontinuierliche Bereitstellen eines geschmolzenen Glases (11) an eine Badoberfläche (13) eines geschmolzenen Metallbads (12) bildet und das Glasband (14) entlang der Badoberfläche (13) vorwärts trägt, wobei die Vorrichtung (10) umfasst:
eine Mehrzahl von Paaren von Oberrollkörpern (21 bis 30), die ausgelegt sind, um Endabschnitte in einer Breitenrichtung des Glasbandes (14) zu unterstützen;
eine Mehrzahl von Reihen von Heizgeräten (41 bis 48), bereitgestellt in einem vorbestimmten Heizbereich oberhalb des Glasbandes (14); und
eine Mehrzahl von Steuergeräten (51 bis 58),
wobei der Heizbereich in eine Mehrzahl von Reihen (A bis H) aufgeteilt ist, angeordnet entlang einer Förderrichtung des Glasbandes (14),
wobei eines oder mehrere der Heizgeräte (41 bis 48) in jedem Teilbereich, erhalten durch das Unterteilen jeder der Reihen (A bis H) in der Breitenrichtung des Glasbandes (14), bereitgestellt ist bzw. sind,
wobei das bzw. die Heizgerät(e) (41 bis 48) innerhalb des entsprechenden Teilbereichs gemeinsam durch eines der Steuergeräte (51 bis 58), welches entsprechend dem Teilbereich bereitgestellt ist, gesteuert wird bzw. werden,
wobei eine Abgrenzung zwischen jeweils zwei benachbarten Reihen als ein Teilabschnitt (17) genommen wird, die rechtwinklig zu der Förderrichtung des Glasbandes (14) ist, und
wobei ein Abstand (L) entlang der Förderrichtung des Glasbandes (14) zwischen dem Teilabschnitt (17), der einem Rotationsmittelpunkt des am weitesten flussabwärts gelegenen Oberrollkörpers (25A) am nächsten ist, und dem Rotationsmittelpunkt des am weitesten flussabwärts gelegenen Oberrollkörpers (25A) innerhalb von 90 cm eingestellt ist.

2. Vorrichtung (10) zur Herstellung von Floatglas nach Anspruch 1, wobei der Abstand (L) innerhalb von 80 cm eingestellt ist.

3. Vorrichtung (10) zur Herstellung von Floatglas nach Anspruch 1 oder 2, wobei der am weitesten flussabwärts gelegene Oberrollkörper (25A) in einem Bereich bereitgestellt ist, in welchem eine Viskosität des Glasbandes (14) von 10^{5,7} dPa·s bis 10^{7,5} dPa·s reicht.

4. Vorrichtung (10) zur Herstellung von Floatglas nach einem der Ansprüche 1 bis 3, wobei ein oder mehrere Trennbereiche (18), die den Heizbereich in der Breitenrichtung unterteilen, zwischen zwei benachbarten Reihen verlagert sind.

5. Vorrichtung (10) zur Herstellung von Floatglas nach einem der Ansprüche 1 bis 4, wobei zwei oder mehrere aufeinanderfolgende Reihen in der Breitenrichtung entlang einer vorbestimmten Fließlinie in dem Glasband (14) unterteilt sind.

6. Floatglasherstellungsverfahren, das die Vorrichtung (10) zur Herstellung von Floatglas nach einem der Ansprüche 1 bis 5 verwendet,
wobei eine Menge an erzeugter Wärme pro Flächeneinheit der flussabwärts gelegenen Reihe von zwei benachbarten Reihen, die an den Teilabschnitt (17), der dem Rotationsmittelpunkt des am weitesten flussabwärts gelegenen Oberrollkörpers (25A) am nächsten ist, angrenzen, gesteuert wird, um 85% oder weniger in Bezug auf die Menge an erzeugter Wärme pro Flächeneinheit der anderen flussaufwärts gelegenen Reihe der zwei benachbarten Reihen zu sein.

7. Floatglasherstellungsverfahren nach Anspruch 6, wobei das geschmolzene Glas (11) ein alkalifreies Glas ist, enthaltend, dargestellt durch Massenprozent auf Oxidbasis:
SiO₂: 50 bis 66 Masse-%;
Al₂O₃: 10,5 bis 24 Masse-%;
B₂O₃: 0 bis 12 Masse-%;
MgO: 0 bis 8 Masse-%;
CaO: 0 bis 14,5 Masse-%;
SrO: 0 bis 24 Masse-%;
BaO: 0 bis 13,5 Masse-%;
MgO + CaO + SrO + BaO: 9 bis 29,5 Masse-%; und
ZrO₂: 0 bis 5 Masse-%.

8. Floatglasherstellungsverfahren nach Anspruch 6, wobei das geschmolzene Glas (11) ein alkalifreies Glas ist, enthaltend, dargestellt durch Massenprozent auf Oxidbasis:
SiO₂: 58 bis 66 Masse-%;
Al₂O₃: 15 bis 22 Masse-%;
B₂O₃: 5 bis 12 Masse-%;
MgO: 0 bis 8 Masse-%;
CaO: 0 bis 9 Masse-%;
SrO: 3 bis 12,5 Masse-%;
BaO: 0 bis 2 Masse-%; und
MgO + CaO + SrO + BaO: 9 bis 18 Masse-%.

## Revendications

1. Appareil de fabrication de verre flotté (10) qui forme un ruban de verre (14) en introduisant en continu du verre fondu (11) sur une surface de bain (13) d'un bain de métal fondu (12) et porte le ruban de verre (14) en avant le long de la surface de bain (13), l'appareil (10) comprenant :
plusieurs paires de corps de rouleaux hauts (21 à 30) configurées pour supporter des portions d'extrémité dans une direction de largeur du ruban de verre (14) ;
plusieurs rangées de dispositifs de chauffage (41 à 48) fournies dans une surface de dispositif de chauffage prédéterminée au-dessus du ruban de verre (14) ; et
plusieurs dispositifs de contrôle (51 à 58),
dans lequel la surface de dispositif de chauffage est divisée en plusieurs rangées (A à H) disposées le long d'une direction d'acheminement du ruban de verre (14),
dans lequel un ou plusieurs des dispositifs de chauffage (41 à 48) sont fournis dans chaque sous-surface obtenue en sectionnant chacune des rangées (A à H) dans la direction de la largeur du ruban de verre (14),
dans lequel le(les) dispositif(s) de chauffage (41 à 48) dans la sous-surface respective sont collectivement contrôlés par un des dispositifs de contrôle (51 à 58), lequel est fourni en correspondance à la sous-surface,
dans lequel une limite entre à chaque fois deux rangées adjacentes est prise comme une portion de division (17) perpendiculaire à la direction d'acheminement du ruban de verre (14), et
dans lequel une distance (L) le long de la direction d'acheminement du ruban de verre (14) entre la portion de division (17) la plus proche d'un centre de rotation du corps de rouleau haut le plus en aval (25A) et du centre de rotation du corps de rouleau haut le plus en aval (25A) est fixée pour être dans les 90 cm.

2. Appareil de fabrication de verre flotté (10) selon la revendication 1, dans lequel la distance (L) est fixée pour être dans les 80 cm.

3. Appareil de fabrication de verre flotté (10) selon la revendication 1 ou 2, dans lequel le corps de rouleau haut le plus en aval (25A) est fourni dans une région dans laquelle une viscosité du ruban de verre (14) est de 10^{5,7} dPa.s à 10^{7,5} dPa.s.

4. Appareil de fabrication de verre flotté (10) selon l'une quelconque des revendications 1 à 3, dans lequel une ou plusieurs portions de sectionnement (18) sectionnant la surface de dispositif de chauffage dans la direction de la largeur ne sont pas en alignement entre deux rangées adjacentes.

5. Appareil de fabrication de verre flotté (10) selon l'une quelconque des revendications 1 à 4, dans lequel deux ou plusieurs rangées consécutives sont sectionnées dans la direction de la largeur le long d'une ligne d'écoulement prédéterminée dans le ruban de verre (14).

6. Procédé de fabrication de verre flotté utilisant l'appareil de fabrication de verre flotté (10) selon l'une quelconque des revendications 1 à 5,
dans lequel une quantité de chaleur produite par surface unitaire de la rangée avale de deux rangées adjacentes joignant la portion de division (17) la plus proche du centre de rotation du corps de rouleau haut le plus en aval (25A) est contrôlée pour être de 85 % ou inférieure par rapport à celle de la chaleur produite par surface unitaire de l'autre rangée en amont des deux rangées adjacentes.

7. Procédé de fabrication de verre flotté selon la revendication 6, dans lequel le verre fondu (11) est du verre exempt d'alcali contenant, comme représenté par le pourcentage en masse sur la base d'oxydes :
SiO₂ : de 50 à 66 % en masse ;
Al₂O₃ : de 10,5 à 24 % en masse ;
B₂O₃ : de 0 à 12 % en masse ;
MgO : de 0 à 8 % en masse ;
CaO : de 0 à 14,5 % en masse ;
SrO : de 0 à 24 % en masse ;
BaO : de 0 à 13,5 % en masse ;
MgO + CaO + SrO + BaO : de 9 à 29,5 % en masse ; et
ZrO₂ : de 0 à 5 % en masse.

8. Procédé de fabrication de verre flotté selon la revendication 6, dans lequel le verre fondu (11) est du verre exempt d'alcali contenant, comme représenté en pourcentage en masse sur la base d'oxydes :
SiO₂ : de 58 à 66 % en masse ;
Al₂O₃ : de 15 à 22 % en masse ;
B₂O₃ : de 5 à 12 % en masse ;
MgO : de 0 à 8 % en masse ;
CaO : de 0 à 9 % en masse ;
SrO : de 3 à 12,5 % en masse ;
BaO : de 0 à 2 % en masse ; et
MgO + CaO + SrO + BaO : de 9 à 18 % en masse.
